# EUROPEAN PATENT SPECIFICATION

(11) **EP 3 851 384 B1**
(45) Date of publication and mention of the grant of the patent: **19.04.2023**
(21) Application number: 20400002.0
(22) Date of filing: 20.01.2020
(51) Int. Cl.: B64F 5/60, B64D 47/06

(54) **AN AIRCRAFT WITH AN ILLUMINATION SYSTEM FOR ROTATING BLADES**
FLUGZEUG MIT EINEM BELEUCHTUNGSSYSTEM FÜR LAUFSCHAUFELN
AÉRONEF COMPORTANT UN SYSTÈME D'ÉCLAIRAGE POUR LAMES ROTATIVES

(43) Date of publication of application: 21.07.2021
(73) Proprietor: AIRBUS HELICOPTERS DEUTSCHLAND GmbH, 86609 Donauwörth (DE)
(72) Inventor: Vandenabeele, Julien, 7912 Saint-Sauveur (BE)
(74) Representative: GPI Brevets

(56) References cited:
- EP-A1- 3 072 813
- WO-A1-2018/082373
- US-A- 4 465 367
- US-A1- 2005 007 257
- US-A1- 2018 002 034
- US-B1- 9 815 565

## Description

The present embodiments relate to an aircraft, and, more particularly, to an aircraft with an illumination system that pulses light at rotating blades.

Rotors and/or propellers of rotary wing or fixed wing aircraft that rotate at high speed pose a safety concern for equipment that is operated near these rotors and/or propellers and for men that move in the vicinity of these rotors and/or propellers. Unfortunately, propeller- and/or rotor-strike are a well-known source of accidents in aviation, and many cases of personal injuries or fatalities caused by propeller- and/or rotor-strike accidents have been reported over the past decades.

While most of those accidents were caused by aircraft propellers or helicopter tail rotors, new threats are currently emerging with the development of new innovative aircraft configurations such as Urban Air Mobility (UAM) vehicles that have open rotors.

The main problem is that rotors and/or propellers that are turning at high speed are poorly visible to people on the ground and often appear as a steady transparent disk. Furthermore, the human eye distinguishes accurately between different objects only in a very small conic area that is often referred to as the central vision of a person. In fact, good central vision allows a person to see shapes, colors, and details clearly and sharply. In contrast thereto, the peripheral vision, which occurs outside the point of fixation, is inaccurate and detects mostly movements and important changes in brightness and/or contrasts.

Moreover, people who are moving around a stationary rotary wing or fixed wing aircraft with turning propellers and/or rotors are likely to focus on a specific task. In addition, these people may be distracted by the noisy and busy surroundings of the aircraft. As a result, they may walk into turning propellers and/or rotors due to a lack of perception of the rotating part.

In order to improve the visual perception of rotating rotor and/or propeller blades within the peripheral vision, specific lighting means have been implemented that increase the visibility of the perimeter of the rotor disk, especially in dark conditions. However, due to the rotation of the blades, the installation of lights directly on the blade tips is complex and expensive as electrical energy must be either generated or stored in the rotating part, or transferred from the static part of the rotor/propeller to the rotating part. Moreover, the installation of lights on small blades is also complex, because the available space is limited.

Alternative solutions exist that use high-contrast and/or photoluminescent markings on the rotating blades of a rotor or propeller, eventually combined with external light sources that are directed towards the high-contrast and/or photoluminescent markings. High-contrast and/or photoluminescent markings only improve the perception of the rotor or propeller perimeter or disc. In fact, the rotor or propeller appears to be a steady disk with illuminated surroundings. However, high-contrast and/or photoluminescent markings do not significantly increase the perception of the high-speed rotation of the rotor and/or propeller, which is key to improve danger-awareness for people in the vicinity of the rotating blades.

In some scenarios, for example when a bird or a lightning has hit the rotor and/or propeller during a flight, a visual inspection of the blades may be desirable. Current solutions direct external light sources towards the rotor and/or propeller. Optionally, the blades may be painted with contrasted, reflective, or photoluminescent paint. The rotor or propeller disc as a whole may be visualized and obvious anomalies may be detected. However, a detailed blade inspection is not possible with these solutions as the individual blades remain undiscernible to the human eye.

Document US 3,723,722 A describes relatively rotatable elements coupled for light transmission by fiber optic devices analogous to electrical commutators. A rotary wing aircraft embodiment employing fiber optics in the rotor blade for navigational lights has a flexible light pipe extension from the blade with an end fixed to move with the driving assembly in a set circular path, to sweep by and pick up light from a light source on the body. Other portions of the extension flex to follow cyclic pivoting of the blade relative to its driving assembly. Fibers in the blade are arranged to bend with the blade during operation by use of a flexible light pipe within which the fibers adjust relative to one another during blade bending. Heat-curing of plastic about a heat resistant flexible light pipe and bonding the fibers directly into the blade matrix as bendable strength element using a thin, wide and long ribbon of optical fibers are shown. Light sources on the body of the aircraft are shown as fiber light pipes with ends fixed to be swept by the pickup pipes. Four source light pipes provide light in accordance with navigational rules, a rotor blade receiving alternately white, green, white, red light as it rotates through various sectors. A Maxwellian lens at the end of a source light pipe defines an extended lighted arc along the pickup path, to provide extended duration of light transmission in each sector, the lens also enabling variation in the physical position of the blade assembly as occurs in the field.

Document US 2010/0079729 A1 describes a system for displaying information via a light source on rotating helicopter blades of an aircraft such as a helicopter. The light source may be a laser light source and the light therefrom may be directed onto the aircraft blade by one or more motion-controlled mirrors and a computer controller. A sensor is capable of determining the position of helicopter blades during rotation, such that light may be projected upon only the moving blade at precisely timed intervals, so as to form perceivable graphics and/or messages thereon. In addition, such system may be utilized for displaying graphics and/or messages on rotating propellers of fixed wing aircraft.

Document US 2007/0247832 A1 describes a fan with illuminated blades for displaying pictorial elements on exposed faces of the blades. The display is provided with in situ generated light in a display device or from a back-lighting arrangement. The fan with illuminated blades may be utilized to display static or animated messages.

The document US2005007257 describes a system for tracking the relative position of parts of an aircraft by projecting an illumination pattern forward of this parts. An embodiment shows backlight strobe blades directed from the aircraft against the rear of the blades. The light flashes so that the motion of the blades is adjusted in relation to the rotation number of RPM of the blades. In an example, this blade appears to move, so as to increase the visibility of the blades. The documents US9815565, WO2018082373, US2018002034, US4465367 and EP3072813 were also cited.

In summary, conventional applications try to make rotors and/or propellers that are turning at high speed visible to the human eye. However, none of these conventional applications creates on the rotor and/or propeller a visual and perceptible rotational movement, thereby increasing the danger awareness, and thus the safety, for people and equipment in the vicinity of the rotor. Furthermore, none of these conventional applications visually stop or at least visually slow down the rotor and/or propeller to enable the visual inspection of individual rotating blades while the rotor or propeller is turning at high speed.

It is, therefore, an objective to provide an aircraft with a new system for making reflections of light off individual blades of a rotor and/or propeller distinguishable from each other for the human eye. The new system should increase the safety of people and equipment that operate in the vicinity of rotors and/or propellers on the ground. Furthermore, the new system should enable a visual inspection of individual blades of a rotor, propeller, or jet engine during a flight.

The objective is solved by an aircraft with a system comprising the features of claim 1. More specifically, an aircraft comprising a thrust producing unit with a plurality of rotating blades that rotate at a first frequency, wherein first and second rotating blades of the plurality of rotating blades are indistinguishable from each other by the human eye at the first frequency, comprises a light source that is installed on a fixed surface of the aircraft and pulses light towards the plurality of rotating blades at a second frequency, characterized in that: the second frequency is selected dependent on the first frequency such that first reflections of the light off the first rotating blade are distinguishable by the human eye from second reflections of the light off the second rotating blade.

The system uses a pulsed light source whose flashing frequency and duty cycle are adapted to the frequency of rotation of the rotating blades in order to create a moving visible pattern. The light source is installed on a fixed part of the aircraft and directed towards the thrust producing unit. High contrast or photoluminescent markings may be applied on the rotating blades in order to increase the visibility under the pulsed light. This system may be preferably used in a dark environment.

By adapting the flashing rate of the light to the revolutions per minute (rpm) of the rotating blades, the rotational movement of the rotating blades can be visually slowed down to a speed where blade movement is perceivable to the human eye. A blade movement that is perceivable to the human eye is expected to better catch the attention of people in the vicinity of the thrust producing units and highly increases the perception and detection of danger.

Moreover, if the perceived angular motion of the rotating blades is slowed down sufficiently, the blades will appear as moving slowly or even being steady which allows performing visual inspection while the thrust producing unit is actually rotating at high speed.

If desired, the system may include more than one light. The lights may be visible or in the UV range, electrically supplied, and directed towards the thrust producing unit. If more than one light is used on a same thrust producing unit, synchronization between the lights may be required.

The system may include high-contrast markings on the rotating blades. The high-contrast markings may be paint or layered material. If desired, the high-contrast markings can be made of photoluminescent material (e.g. fluorescent) to increase brightness and contrast (e.g., if combined with UV light). The high-contrast markings can be arranged in different ways and with different colors depending on the desired pattern.

Optionally, a sensor may provide rotation frequency measurements of the rotating blades to the lights or to a controller that automatically adjusts the flashing rate of the lights based on the frequency of rotation of the rotating blades.

If desired, the system may include operating controls such as an ON-OFF switch and/or controls e.g. for selection of a particular pattern and/or angular speed of the reflections off the rotating blades.

The system improves the safety in the vicinity of the rotating blades thanks to an increased perception of the perimeter of the rotating blades and of the movement of the rotating blades in dark environments. The system enables the visual inspection of the rotating blades while they are turning at high speed.

Moreover, the system is relatively low cost and requires a low integration effort, while having a positive effect on the external appearance of the aircraft.

The light source is operable in at least two different modes comprising a safety mode and a visual inspection mode.

According to one aspect, the light source is adapted for operating in the safety mode when the aircraft is on the ground and in the visual inspection mode when the aircraft is airborne.

According to one aspect, the first and second reflections of the light off the first and second rotating blades form a rotating pattern that rotates at a third frequency.

According to one aspect, in the safety mode, the second frequency is selected dependent on the first frequency such that the first and second rotating blades remain indistinguishable from each other by the human eye.

In the visual inspection mode, the second frequency is selected dependent on the first frequency such that the first and second reflections of the light off the first and second rotating blades render the first and second rotating blades, that are otherwise indistinguishable from each other by the human eye, distinguishable from each other by the human eye.

According to one aspect, in the visual inspection mode, the second frequency is selected dependent on the first frequency such that the first and second reflections of the light off the first and second rotating blades appear to be steady to the human eye.

According to one aspect, the second frequency is selected as an integer divisor of the first frequency.

According to one aspect, the light source pulses light at the second frequency with a predetermined duty cycle that is different from a 50% duty cycle.

According to one aspect, the aircraft further comprises an additional light source that is installed on the fixed surface of the aircraft and pulses an additional light at the second frequency towards the plurality of rotating blades, wherein the duty cycles of the light and the additional light are synchronized such that the additional light is on when the light is on and the additional light is off when the light is off.

According to one aspect, the aircraft further comprises high-contrast markings on the first and second rotating blades.

According to one aspect, the light is invisible to the human eye and the high-contrast markings are made of photoluminescent material such that the first and second reflections are visible to the human eye.

According to one aspect, the aircraft further comprises a sensor that measures the first frequency.

According to one aspect, the aircraft further comprises a controller that includes at least one of an on-off switch for the light source, a mode selector for selecting between the at least two different modes, a display panel, a controller interface, means adapted for selecting the second frequency, or a power supply.

According to one aspect, the thrust producing unit comprises at least one of a rotor, a propeller, or a jet engine.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative aircraft with an exemplary thrust producing unit and a plurality of light sources that are installed on a fixed surface of the aircraft and pulse light towards the thrust producing unit in accordance with some embodiments,
- Figure 2 is a diagram of an illustrative aircraft with a thrust producing unit and a light source that operates in a visual inspection mode in accordance with some embodiments,
- Figure 3 is a diagram of an illustrative aircraft with a thrust producing unit and a light source that operates in a safety mode in accordance with some embodiments,
- Figure 4 is a diagram of an illustrative electrical system showing a thrust producing unit with a plurality of rotating blades, a sensor, and a controller for controlling a light source that pulses light towards the plurality of rotating blades in accordance with some embodiments,
- Figure 5A is a diagram of an illustrative airplane with two propellers and light sources that pulse light towards the rotating blades of the propellers in accordance with some embodiments,
- Figure 5B is a diagram of an illustrative aircraft with two propellers or rotors and light sources that pulse light towards the rotating blades of the propellers or rotors in accordance with some embodiments,
- Figure 5C is a diagram of an illustrative aircraft with two propellers or rotors and light sources that pulse light towards the rotating blades of the propellers or rotors in accordance with some embodiments,
- Figure 5D is a diagram of an illustrative helicopter with one main rotor and light sources that pulse light towards the rotating blades of the main rotor in accordance with some embodiments,
- Figure 5E is a diagram of an illustrative helicopter with a main rotor and a tail rotor and light sources that pulse light towards the rotating blades of the tail rotor in accordance with some embodiments, and
- Figure 5F is a diagram of an illustrative airplane with at least one jet engine and a light source that pulse light towards the rotating blades of the at least one jet engine in accordance with some embodiments.

Exemplary embodiments may include any aircraft having a thrust producing unit with a plurality of rotating blades. An exemplary aircraft may include an airplane, a helicopter, a multicopter, a drone, a zeppelin, etc. An exemplary thrust producing unit with a plurality of rotating blades may include a propeller, a rotor, a jet engine, or any combination thereof.

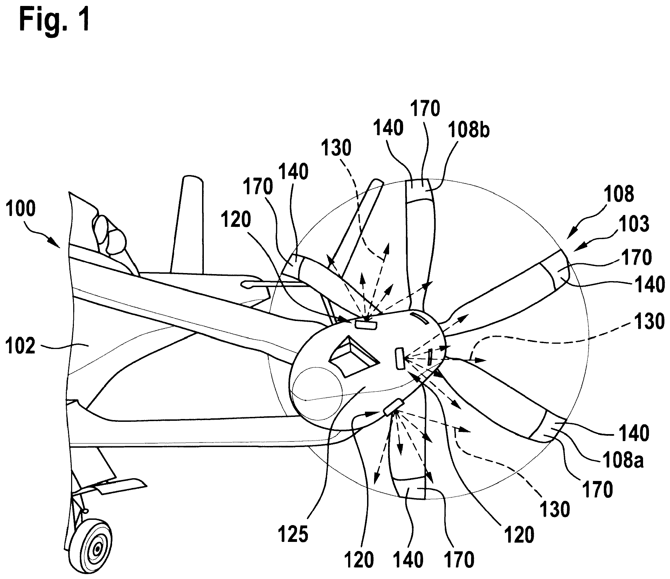

Figure 1 shows an example of an aircraft 100 that is exemplarily illustrated as a compound aircraft 100. Aircraft 100 may have an aircraft airframe 102. The aircraft airframe 102 defines a supporting structure of aircraft 100 that is also referred to hereinafter as the fuselage 102 of the aircraft 100.

By way of example, the aircraft 100 comprises a predetermined number of thrust producing units 103. It should be noted that a thrust producing unit may, based on the actual implementation, generate a push in horizontal direction, vertical direction, or any combination thereof. As an example, a main rotor of a helicopter may generate thrust in horizontal direction, vertical direction, or a combination thereof. As another example, a jet engine of an airplane may generate thrust predominantly in a horizontal direction, which the airplane may, with the help of the wings, transform in a combination of vertical and horizontal thrust.

If desired, the predetermined number of thrust producing units 103 comprises one or more thrust producing units 103. For example, aircraft 100 may comprise one, two, three, four, or more thrust producing units.

It should be noted that the thrust producing units 103 of aircraft 100 are exemplarily arranged laterally with respect to the fuselage 102. In other words, thrust producing units 103 are exemplarily arranged on the left or right side of the fuselage 102 seen in its longitudinal direction. Accordingly, in Figure 1 only one thrust producing unit 103 is visible.

According to one aspect, thrust producing unit 103 is equipped with a plurality of rotating blades 108, which include first and second rotating blades 108a, 108b. Thrust producing unit 103 of Figure 1 may include six rotating blades. However, thrust producing unit 103 may have any other number of rotating blades 108, if desired. For example, thrust producing unit 103 may have two, three, four, five, seven, or more rotating blades.

Thrust producing unit 103 may rotate at high speed and pose a safety concern for equipment and men in the vicinity of thrust producing unit 103. In fact, first and second rotating blades 108a, 108b of the plurality of rotating blades 108 are indistinguishable from each other by the human eye when rotating at a high speed. The speed of rotation may be associated with a frequency of rotation. The frequency of rotation may be measured in Hz, which corresponds to a number of revolutions per second.

A light source 120 is installed on a fixed surface 125 of aircraft 100. A fixed surface 125 may be any surface of aircraft 100 that is not rotating with the plurality of rotating blades 108. As an example, any surface of aircraft airframe 102 may be a fixed surface 125. As another example, any surface of a wing of aircraft 100 that is not moving relative to thrust producing unit 103 may be a fixed surface 125.

In some scenarios, aircraft 100 may have a thrust producing unit 103 with a plurality of rotating blades 108 that rotate in a horizontal plane (i.e., parallel to the ground) during lift-off and in a vertical plane (i.e., vertical to the ground) during cruise flight. In these scenarios, a light source 120 is installed on a fixed surface 125 relative to the plurality of rotating blades 108. In other words, the light source 120 may move from a first position during lift-off to a second position during cruise flight such that the light source 120 pulses light 130 towards the plurality of rotating blades 108 in both positions.

If desired, aircraft 100 may have two different light sources 120, a first light source 120 in a first position that pulses light 130 towards the plurality of rotating blades 108 during lift-off and a second light source 120 in a second position that pulses light 130 towards the plurality of rotating blades 108 during cruise flight.

Light source 120 pulses light 130 towards the plurality of rotating blades 108 at a second frequency. The second frequency may be different than the frequency of rotation. However, if desired, the second frequency may be the same as the frequency of rotation.

The second frequency may be selected dependent on the frequency of rotation such that first reflections 140 of the light 130 off the first rotating blade 108a are distinguishable by the human eye from second reflections 140 of the light 130 off the second rotating blade 108b.

Illustratively, light source 120 pulses light 130 at the second frequency with a predetermined duty cycle. The duty cycle of light 130 is the portion of time during which light 130 is on in one period. For example, light 130 may be on and off for the same time during one period, which corresponds to a 50% duty cycle. As another example, light 130 may be on for 80% of one period and off for 20% of one period, which corresponds to an 80% duty cycle.

By way of example, light source 120 may pulse light 130 at the second frequency with a predetermined duty cycle. The predetermined duty cycle may be 50%. If desired, the predetermined duty cycle may be different from a 50% duty cycle.

As shown in Figure 1, aircraft 100 may have several light sources 120 that pulse light 130 towards the plurality of rotating blades 108. For example, aircraft 100 may have at least two light sources 120 that are installed on the fixed surface 120 of aircraft 100 and pulse light 130 at the plurality of rotating blades 108 of a same thrust producing unit 103.

The at least two light sources 120 may pulse light 130 at the same frequency towards the plurality of rotating blades 108 of the same thrust producing unit 103. Preferably, the duty cycles of the light 130 from all light sources 120 of the at least two light sources 120 are synchronized such that the light 130 from all light sources 120 is on at the same time intervals and off at the same time intervals.

In other words, first and second light sources 120 may be installed on the fixed surface 125 of aircraft 100 and pulse respective first and second lights 130 at the second frequency towards the plurality of rotating blades 108 of a same thrust producing unit 103, whereby the duty cycles of the first light 130 and the second light 130 are synchronized such that the second light 130 is on when the first light 130 is on and the second light 130 is off when the first light 130 is off.

Illustratively, the plurality of rotating blades 108 may have high-contrast markings 170. As shown in Figure 1, the high-contrast markings 170 may cover a portion of each rotating blade (e.g., the end of rotating blades 108a, 108b). If desired, the high-contrast markings 170 may entirely cover each rotating blade. Alternatively, each rotating blade of the plurality of rotating blades 108 may have a predetermined pattern of high-contrast markings 170.

By way of example, all rotating blades of the plurality of rotating blades 108 may have the same high-contrast markings 170. If desired, at least one rotating blade of the plurality of rotating blades 108 (e.g., rotating blade 108a) may have a different predetermined pattern of high-contrast markings 170 than another rotating blade of the plurality of rotating blades 108 (e.g., rotating blade 108b).

Illustratively, light 130 may include more than one frequency spectrum. As an example, light 130 may be white. As another example, light 130 may have any color from the spectrum of visible light. If desired, light 130 may be invisible to the human eye. In other words, light 130 may have a frequency that is selected out of the spectrum of invisible light (e.g., ultraviolet light or infrared light).

By way of example, high-contrast markings 170 may be made of photoluminescent material such that reflections 140 of light 130 off the plurality of rotating blades 108 are visible to the human eye, even if the light 130 may be invisible to the human eye.

Light source 120 is operable in at least two different modes. The at least two different modes include a safety mode and a visual inspection mode. Illustratively, light source 120 may be adapted for operating in the safety mode when the aircraft 100 is on the ground and in the visual inspection mode when the aircraft 100 is airborne.

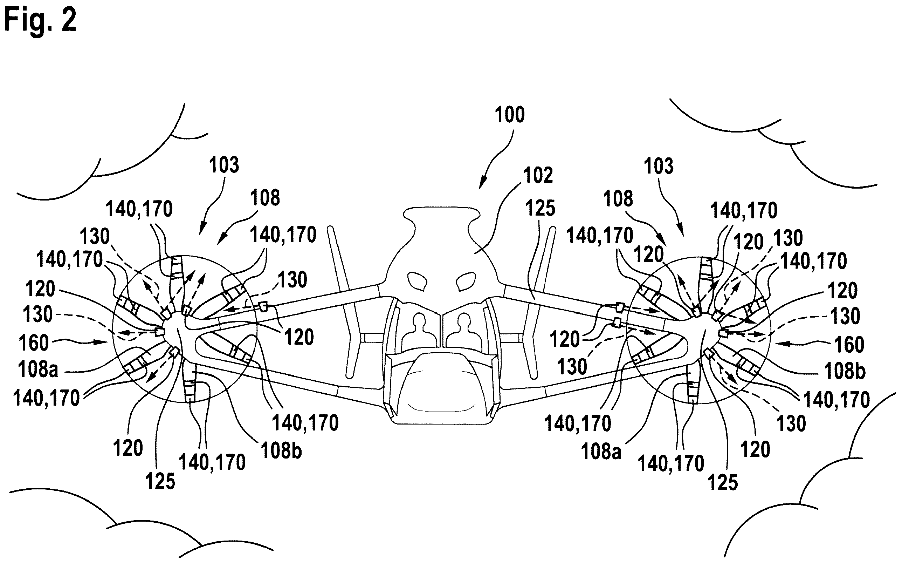

Figure 2 is a diagram of an illustrative aircraft 100 with a thrust producing unit 103 and a light source 120 that operates in a visual inspection mode 160 in accordance with some embodiments. Light source 120 may be adapted for operating in visual inspection mode 160 when the aircraft 100 is airborne.

Thrust producing unit 103 includes a plurality of rotating blades 108. The plurality of rotating blades 108 rotate at a first frequency. The first frequency may be measured in Hertz (Hz) and correspond to a number of revolutions per second.

A light source 120 is installed on a fixed surface of aircraft 100 and pulses light 130 towards the plurality of rotating blades 108 at a second frequency. If desired, the second frequency may be measured in Hertz (Hz) and correspond to one divided by a time interval measured in seconds. The time interval starts at the moment that the light 130 is turned on, and the time interval ends at the moment that the light 130 is turned on again after the light 130 has been turned off.

The light 130 causes reflections 140 off the plurality of rotating blades 108. Aircraft 100 may have high-contrast markings 170 at least on first and second rotating blades 108a, 108b of the plurality of rotating blades 108. If desired, aircraft 100 may have high-contrast markings 170 on each rotating blade of the plurality of rotating blades 108.

In the visual inspection mode 160, the frequency at which light source 120 pulses light 130 towards the plurality of rotating blades 108 (i.e., the second frequency) is selected dependent on the frequency of rotation of the plurality of rotating blades 108 (i.e., the first frequency) such that first and second reflections 140 of the light 130 off the first and second rotating blades 108a, 108b render the first and second rotating blades 108a, 108b, that are otherwise indistinguishable from each other by the human eye, distinguishable from each other by the human eye.

To be distinguishable from each other by the human eye, the second frequency may be selected dependent on the first frequency such that first and second rotating blades 108a, 108b appear to be moving very slowly to the human eye. In other words, first and second reflections 140 of the light 130 off the first and second rotating blades 108a, 108b may form a rotating pattern that rotates at a third frequency. If desired, the second frequency may be selected dependent on the first frequency such that first and second rotating blades 108a, 108b appear to be steady to the human eye (i.e., the third frequency may be zero).

As an example, the second frequency may be selected as an integer divisor of the first frequency. In this example, the first and second rotating blades 108a, 108b may reflect light 130 when they are in the same angular position. Thus, the first and second rotating blades 108a, 108b may appear to be steady to the human eye.

As another example, consider the scenario in which X is an integer divisor of the first frequency. Consider further that the second frequency is selected to be X±X*A/360 with 0<A<360. In this scenario, the first and second rotating blades 108a, 108b may reflect light 130 at different angular positions between subsequent light pulses of light 130.

In fact, first and second rotating blades 108a, 108b may appear to the human eye to be moving by A degrees between two subsequent light pulses of light 130. In particular, first and second rotating blades 108a, 108b may appear to the human eye to be rotating by A degrees in rotation direction of the plurality of rotating blades 108 when the second frequency is selected to be X-X*A/360, and first and second rotating blades 108a, 108b may appear to the human eye to be rotating by A degrees against the rotation direction of the plurality of rotating blades 108 when the second frequency is selected to be X+X*A/360.

Since the first and second rotating blades 108a, 108b of the plurality of rotating blades 108 of thrust producing unit 103 are distinguishable from each other by the human eye, all individual rotating blades of the plurality of rotating blades 108 may be distinguishable from each other by the human eye. In other words, if the plurality of rotating blades 108 includes more than two rotating blades, all rotating blades of the plurality of rotating blades 108 of the thrust producing unit 103 and not only the first and second rotating blades 108a, 108b may be distinguishable from each other by the human eye.

Thus, all individual rotating blades of the plurality of rotating blades 108 of thrust producing unit 103 may be visually inspected for damage during a flight. Such a visual inspection of the individual rotating blades of the plurality of rotating blades 108 may be desirable if a problem with the thrust producing unit 103 occurs. For example, after an object (e.g., a bird) has hit the thrust producing unit 103 during a flight (i.e., when aircraft 100 is airborne), a visual inspection of the individual rotating blades of the plurality of rotating blades 108 may be desirable.

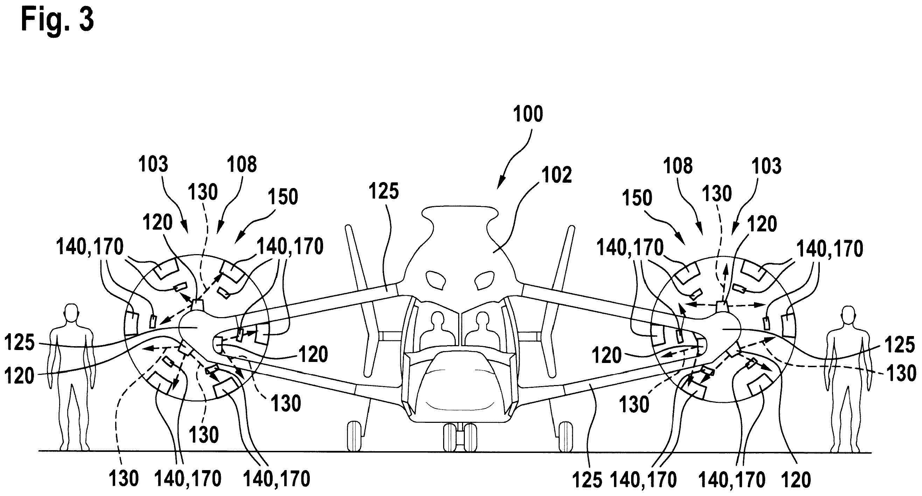

Figure 3 is a diagram of an illustrative aircraft 100 with a thrust producing unit 103 and a light source 120 that operates in a safety mode 150 in accordance with some embodiments. Light source 120 may be adapted for operating in the safety mode 150 when the aircraft 100 is on the ground.

Thrust producing unit 103 includes a plurality of rotating blades 108. The plurality of rotating blades 108 rotate at a first frequency. The first frequency may be measured in Hertz (Hz) and correspond to a number of revolutions per second.

A light source 120 is installed on a fixed surface of aircraft 100 and pulses light 130 towards the plurality of rotating blades 108 at a second frequency. If desired, the second frequency may be measured in Hertz (Hz) and correspond to one divided by the time interval measured in seconds. The time interval starts at the moment that the light 130 is turned on, and the time interval ends at the moment that the light 130 is turned on again after the light 130 has been turned off.

The light 130 causes reflections 140 off the plurality of rotating blades 108. The plurality of rotating blades 108 includes first and second rotating blades 108a, 108b, and the light 130 causes first reflections 140 off the first rotating blade 108a and second reflections 140 off the second rotating blade 108b.

Aircraft 100 may have high-contrast markings 170 on the plurality of rotating blades 108, if desired. The high-contrast markings 170 may be made of photoluminescent material such that the first and second reflections 140 are visible to the human eye even if the light 130 is invisible to the human eye. For example, the light 130 may be infrared or ultraviolet light.

In the safety mode 150, the frequency at which light source 120 pulses light 130 towards the plurality of rotating blades 108 (i.e., the second frequency) is selected dependent on the frequency of rotation of the plurality of rotating blades 108 (i.e., the first frequency) such that first and second reflections 140 of the light 130 off the first and second rotating blades 108a, 108b form a rotating pattern that rotates at a third frequency.

In the safety mode 150, it may be desirable to generate a visible movement of the plurality of rotating blades 108. In fact, a visible movement of the plurality of rotating blades 108 when rotating at high speed increases the noticeability of the rotating blades and the danger awareness in the vicinity of the rotating blades. Thus, the second frequency is preferably selected such that the third frequency is non-zero in safety mode 150.

However, even though the second frequency is selected dependent on the first frequency such that first reflections 140 of the light 130 off the first rotating blade 108a are distinguishable by the human eye from second reflections 140 of the light 130 off the second rotating blade 108b, the first and second rotating blades 108a, 108b may remain indistinguishable from each other by the human eye in the safety mode 150.

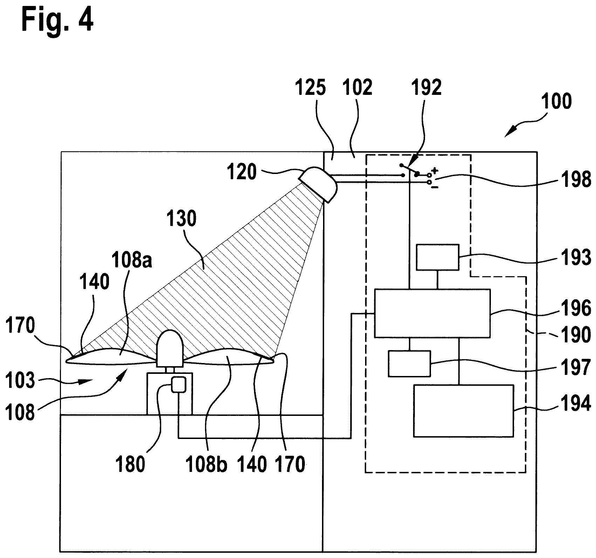

Figure 4 is a diagram of an illustrative electrical system showing a thrust producing unit 103 with a plurality of rotating blades 108, a sensor 180, and a controller 190 for controlling a light source 120 that is installed on a fixed surface 125 of aircraft 100 and directed towards the plurality of rotating blades 108. Light source 120 pulses light 130 towards the plurality of rotating blades 108.

The plurality of rotating blades 108 of thrust producing unit 103 include first and second rotating blades 108a, 108b. If desired, the plurality of rotating blades 108 of thrust producing unit 103 may include more than two rotating blades.

The first and second rotating blades 108a, 108b may have high-contrast markings 170. The high-contrast markings 170 may be painted on the first and second rotating blades 108a, 108b. If desired, the high-contrast markings 170 may form an additional layer made from a material that is different than paint on the first and second rotating blades 108a, 108b.

The high-contrast markings 170 may provide for an increased reflection 140 of the light 130 off the first and second rotating blades 108a, 108b. If desired, the light 130 may be invisible to the human eye, and the high-contrast markings 170 may be made of photoluminescent (e.g., fluorescent) material such that first and second reflections 140 off the first and second rotating blades 108a, 108b are visible to the human eye.

Illustratively, the high-contrast markings 170 may be arranged on the first rotating blade 108a in a different pattern than on the second rotating blade 108b. If desired, the high-contrast markings 170 may be arranged in the same pattern on the first rotating blade 108a and on the second rotating blade 108b.

By way of example, the first rotating blade 108a may have two or more different high-contrast markings 170, whereby at least two of the two or more high-contrast markings 170 have a different color. If desired, all high-contrast markings 170 on the first rotating blade 108a may have the same same color.

By way of example, the first rotating blade 108a may have high-contrast markings 170 that have a different color than the high-contrast markings 170 on the second rotating blade 108b. If desired, the high-contrast markings 170 on the first rotating blade 108a and the second rotating blade 108b may have the same color.

The plurality of rotating blades 108 of thrust producing unit 103 rotate at a first frequency. The first frequency may be measured in Hertz (Hz) and correspond to a number of revolutions per second. If desired, aircraft 100 may include a sensor 180 that measures the first frequency.

Light source 120 pulses light 130 towards the plurality of rotating blades 108 at a second frequency. Light source 120 may pulse light 130 at the second frequency with a predetermined duty cycle. The duty cycle may be a 50% duty cycle (i.e., light 130 is on and off for the same duration). If desired, the predetermined duty cycle may be different than a 50% duty cycle.

Illustratively, aircraft 100 may include controller 190. Controller 190 may include at least one of an on-off switch for the light source 192, a mode selector 193 for selecting between different modes (e.g., between at least two different modes including a safety mode and a visual inspection mode such as safety mode 150 of Figure 3 and visual inspection mode 160 of Figure 2), a display panel 194, a controller interface 196, means 197 adapted for selecting the second frequency, or a power supply 198.

As shown in Figure 4, controller 190 may include all of the above mentioned components, i.e., an on-off switch for the light source 192, a mode selector 193 for selecting between different modes (e.g., between at least two different modes including a safety mode and a visual inspection mode such as safety mode 150 of Figure 3 and visual inspection mode 160 of Figure 2), a display panel 194, a controller interface 196, means 197 adapted for selecting the second frequency, and a power supply 198. If desired, display panel 194 and/or power supply 198 may be outside of controller 190.

Power supply 198 may provide electrical power to light source 120. For example, power supply 198 may provide electrical power to light source 120 via on-off switch 192. Controller interface 196 may provide means for controlling on-off switch 192.

Illustratively, controller interface 196 may control on-off switch 192, thereby turning the light 130 on and off. Controller interface 196 may control on-off switch 192 by turning the light 130 on and off at the second frequency. If desired, controller interface 196 may control on-off switch 192 by turning the light 130 on and off to implement the predetermined duty cycle. If desired, part of the controller of the pulsed light 130 may also be integrated directly inside of the housing of the light source 120.

By way of example, controller interface 196 may be connected to mode selector 193. Mode selector 193 may be adapted for selecting between different modes of operating light source 120 (e.g., via controller interface 196). For example, light source 120 may be operable in at least two different modes including a safety mode (e.g., safety mode 150 of Figure 3) and a visual inspection mode (e.g., visual inspection mode 160 of Figure 2), and mode selector 193 may be adapted to select between these modes. If desired, light source 120 may have an off mode in which no light is pulsed towards the plurality of rotating blades 108.

Illustratively, mode selector 193 may automatically leave the off mode when the thrust producing unit 103 is turned on and select between a safety mode and a visual inspection mode based on the current operation of aircraft 100. For example, mode selector 193 may select the safety mode when the aircraft 100 is on the ground and select the visual inspection mode when the aircraft 100 is airborne. If desired, mode selector 193 may have a user interface, and a user (e.g., the pilot or co-pilot of aircraft 100) may manually select between the at least two different modes.

By way of example, controller 190 may include means 197 adapted for selecting the second frequency. The means 197 adapted for selecting the second frequency may receive information about the first frequency of rotation of the plurality of rotating blades 108 and select the second frequency dependent on the first frequency. If desired, the means 197 adapted for selecting the second frequency may include means for selecting a corresponding duty cycle.

The means 197 for selecting the second frequency may receive the information about the first frequency directly from sensor 180 or from sensor 180 via controller interface 196.

First and second reflections 140 of the light 130 off the first and second rotating blades 108a, 108b may form a rotating pattern that rotates at a third frequency. If desired, a user may select or predetermine the third frequency (e.g., via controller interface 196) and the means 197 for selecting the second frequency may select the second frequency dependent on the first frequency and the third frequency.

For example, a user may select the third frequency to be zero. When the third frequency is zero, the first and second rotating blades 108a, 108b may appear to be steady. In this example, the second frequency may be selected as an integer divisor of the first frequency.

Controller 190 may include a display panel 194. Display panel 194 may display information to a user (e.g., the pilot, co-pilot, or any other crew member of aircraft 100). The displayed information may include the first frequency, the second frequency, the third frequency, the duty cycle of the light 130, the selected operation mode of light source 120, or any other information that may be useful to a user.

If desired, more than one light source 120 may pulse light 130 at the plurality of rotating blades 108 of thrust producing unit 103, and controller 190 may control each one of the more than one light source 120.

The above-described system with a light source 120 that is installed on a fixed surface 125 of an aircraft 100 and pulses light 130 towards the plurality of rotating blades 108 at a frequency that is selected dependent on the revolution frequency of the plurality of rotating blades 108 such that first reflections 140 of the light 130 off a first rotating blade 108a of the plurality of rotating blades 108 are distinguishable by the human eye from second reflections 140 of the light 130 off a second rotating blade 108b of the plurality of rotating blades 108 can be implemented on many different aircraft configurations, including on aircraft 100 with thrust producing units 103 that include propellers, main rotors, tail rotors, and/or jet engines. Illustratively, the thrust producing unit 103 comprises at least one of a rotor 104, a propeller 105, or a jet engine 106.

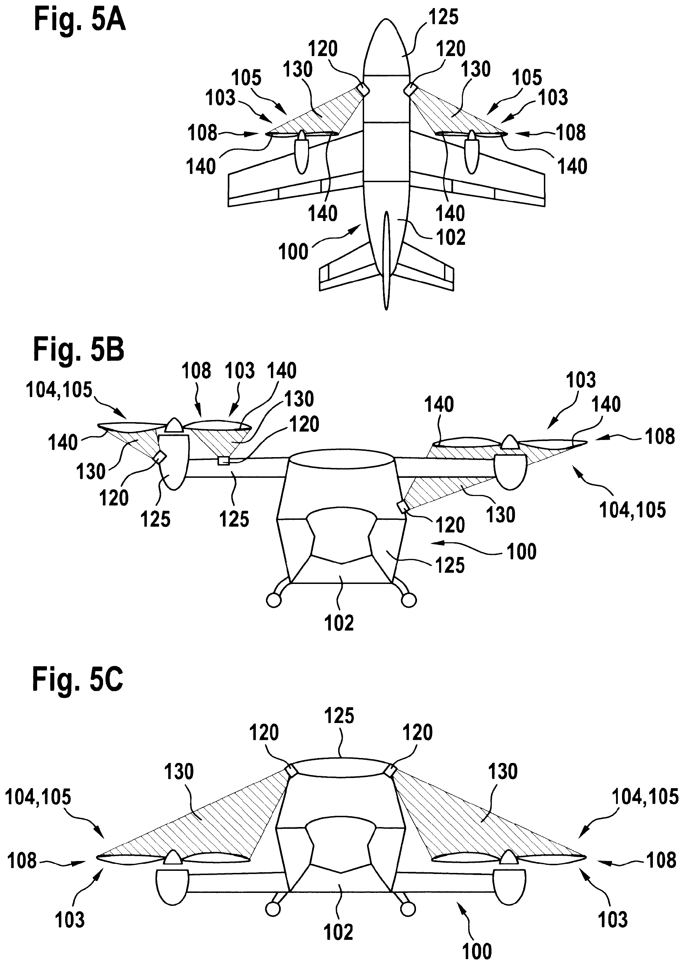

Figure 5A is a diagram of an illustrative airplane with two propellers 105 and light sources 120 that are installed on fixed surfaces 125 of the airplane and pulse light 130 towards the rotating blades 108 of the propellers 105 in accordance with some embodiments.

Figure 5B is a diagram of an illustrative aircraft 100 with two propellers 105 or rotors 104 and light sources 120 that are installed on fixed surfaces 125 of the aircraft 100 and pulse light 130 towards the rotating blades 108 of the propellers 105 or rotors 104 in accordance with some embodiments. As shown in Figure 5B, two different light sources 120 may pulse light 130 towards the same rotating blades 108. In the scenario in which two or more different light sources 120 pulse light 130 towards the same rotating blades 108, the duty cycles of the light 130 from the two or more different light sources 120 may be synchronized such that the light 130 of all of the two or more different light sources 120 is turned on and off simultaneously.

Figure 5C is a diagram of an illustrative aircraft 100 with two propellers 105 or rotors 104 and light sources 120 that are installed on fixed surfaces 125 of the aircraft 100 and that pulse light 130 towards the rotating blades 108 of the propellers 105 or rotors 104 in accordance with some embodiments.

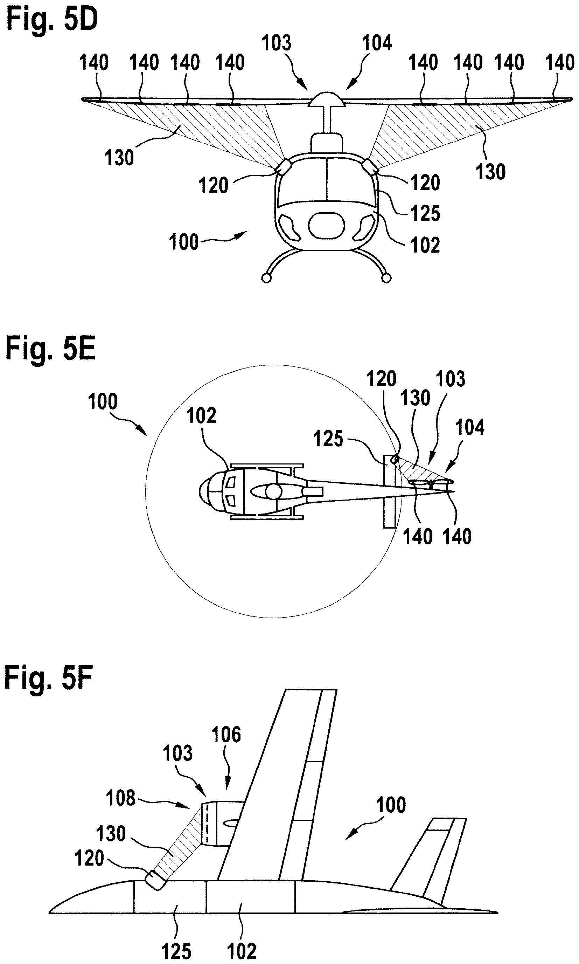

Figure 5D is a diagram of an illustrative helicopter 100 with one main rotor and light sources 120 that are installed on fixed surfaces 125 of the helicopter 100 (e.g., fuselage 102) and that pulse light 130 towards the rotating blades of the main rotor in accordance with some embodiments.

Figure 5E is a diagram of an illustrative helicopter 100 with a main rotor and a tail rotor and a light source 120 that is installed on a fixed surface 125 of the helicopter 100 (e.g., a tail wing) and that pulses light 130 towards the rotating blades of the tail rotor in accordance with some embodiments.

Figure 5F is a diagram of an illustrative airplane 100 with at least one jet engine 106 and a light source 120 that is installed on a fixed surface 125 of the airplane 100 (e.g., aircraft airframe 102) and that pulses light towards the rotating blades 108 of the at least one jet engine 106 in accordance with some embodiments.

The safety concern for equipment that is operated near jet engine 106 and for men that move in the vicinity of jet engine 106 is not as important as for rotors and propellers due to the fact that the rotating blades of jet engine 106 are contained inside of the engine nacelles. However, the light that is pulsed towards the rotating blades 108 of jet engine 106 may enable an in-flight visual inspection of the rotating blades.

It should be noted that modifications to the above described embodiments are within the common knowledge of the person skilled in the art and, thus, also considered as being part of the present invention, as long as they fall within the scope of the appended claims.

For instance, in Figure 4, sensor 180 measures the first frequency in Hertz (Hz) as a number of revolutions per second. However, if desired, sensor 180 may measure the first frequency in revolutions per minute (RPM) which is a more common unit for measuring the rotational speed of a rotor or propeller, and the means 197 for selecting the second frequency of controller 190 may make the conversion into revolutions per second.

If desired, the aircraft may include one or more cameras that are adapted for recording video feed from the plurality of rotating blades in the visual inspection mode. The recorded video feed may be shown on display panel 194 of Figure 4 or transmitted to one of the pilot's or co-pilot's screens for an improved visual inspection of the rotating blades. If desired, the video feed may be recorded in a black box to provide additional information in case of an accident.

### Reference List

- 100: aircraft
- 102: aircraft airframe, fuselage
- 103: thrust producing unit
- 104: rotor
- 105: propeller
- 106: jet engine
- 108: plurality of rotating blades
- 108a,: 108b rotating blade
- 120: light source
- 125: fixed surface
- 130: light
- 140: reflections
- 150: safety mode
- 160: visual inspection mode
- 170: high-contrast markings
- 180: sensor
- 190: controller
- 192: on-off switch for the light source
- 193: mode selector
- 194: display panel
- 196: controller interface
- 197: means adapted for selecting the second frequency
- 198: power supply.

## Claims

1. An aircraft (100) comprising a thrust producing unit (103) with a plurality of rotating blades (108) that rotate at a first frequency, wherein first and second rotating blades (108a, 108b) of the plurality of rotating blades (108) are indistinguishable from each other by the human eye at the first frequency, comprising:
a light source (120) that is installed on a fixed surface (125) of the aircraft (100) and pulses light (130) towards the plurality of rotating blades (108) at a second frequency,
wherein:
the second frequency is selected dependent on the first frequency such that first reflections (140) of the light (130) off the first rotating blade (108a) are distinguishable by the human eye from second reflections (140) of the light (130) off the second rotating blade (108b);
**characterized in that** the light source (120) is operable in at least two different modes comprising a safety mode (150) and a visual inspection mode (160); and in the visual inspection mode (160), the second frequency is selected dependent on the first frequency such that the first and second reflections (140) of the light (130) off the first and second rotating blades (108a, 108b) render the first and second rotating blades (108a, 108b) distinguishable from each other by the human eye.

2. The aircraft (100) of claim 1, wherein the light source (120) is adapted for operating in the safety mode (150) when the aircraft (100) is on the ground and in the visual inspection mode (160) when the aircraft (100) is airborne.

3. The aircraft (100) of claim 1, wherein the first and second reflections (140) of the light (130) off the first and second rotating blades (108a, 108b) form a rotating pattern that rotates at a third frequency.

4. The aircraft (100) of claim 1, wherein, in the safety mode (150), the second frequency is selected dependent on the first frequency such that the first and second rotating blades (108a, 108b) remain indistinguishable from each other by the human eye.

5. The aircraft (100) of claim 1, wherein, in the visual inspection mode (160), the second frequency is selected dependent on the first frequency such that the first and second reflections (140) of the light (130) off the first and second rotating blades (108a, 108b) appear to be steady to the human eye.

6. The aircraft (100) of claim 1, wherein the second frequency is selected as an integer divisor of the first frequency.

7. The aircraft (100) of any one of claims 1-6, wherein the light source (120) pulses light (130) at the second frequency with a predetermined duty cycle that is different from a 50% duty cycle.

8. The aircraft (100) of any one of claims 1 to 7, further comprising:
at least one additional light source (120) that is installed on the fixed surface (125) of the aircraft (100) and pulses at least one additional light (130) at the second frequency towards the plurality of rotating blades (108), wherein the duty cycles of the light (130) and the at least one additional light (130) are synchronized such that the at least one additional light (130) is on when the light (130) is on and the at least one additional light (130) is off when the light (130) is off.

9. The aircraft (100) of any one of claims 1-8, further comprising:
high-contrast markings (170) on the first and second rotating blades (108a, 108b).

10. The aircraft (100) of claim 9, wherein the light (130) is invisible to the human eye and wherein the high-contrast markings (170) are made of photoluminescent material such that the first and second reflections (140) are visible to the human eye.

11. The aircraft (100) of any one of the claims 1-10, further comprising:
a sensor (180) that measures the first frequency.

12. The aircraft (100) of any one of claims 1 to 11, further comprising:
a controller (190) that includes at least one of an on-off switch for the light source (192), a mode selector (193) for selecting between the at least two different modes, a display panel (194), a controller interface (196), means (197) adapted for selecting the second frequency, or a power supply (198).

13. The aircraft (100) of any one of claims 1-12, wherein the thrust producing unit (103) comprises at least one of a rotor (104), a propeller (105), or a jet engine (106).

## Patentansprüche

1. Luftfahrzeug (100), das eine Schuberzeugungseinheit (103) mit einer Mehrzahl von Rotorblättern (108) umfasst, die sich mit einer ersten Frequenz drehen, wobei erste und zweite Rotorblätter (108a, 108b) der Mehrzahl von Rotorblättern (108) bei der ersten Frequenz für das menschliche Auge nicht voneinander unterscheidbar sind, mit:
einer Lichtquelle (120), die auf einer festen Oberfläche (125) des Luftfahrzeugs (100) installiert ist und gepulstes Licht (130) mit einer zweiten Frequenz in Richtung der Mehrzahl der Rotorblätter (108) aussendet,
wobei:
die zweite Frequenz in Abhängigkeit von der ersten Frequenz so gewählt ist, dass erste Reflexionen (140) des Lichts (130) von dem ersten Rotorblatt (108a) für das menschliche Auge von zweiten Reflexionen (140) des Lichts (130) von dem zweiten Rotorblatt (108b) unterscheidbar sind;
**dadurch gekennzeichnet, dass** die Lichtquelle (120) in mindestens zwei verschiedenen Modi betreibbar ist, darunter ein Sicherheitsmodus (150) und ein Sichtprüfungsmodus (160); wobei in dem Sichtprüfungsmodus (160) die zweite Frequenz in Abhängigkeit von der ersten Frequenz so ausgewählt ist, dass die ersten und zweiten Reflexionen (140) des Lichts (130) von dem ersten und zweiten Rotorblatt (108a, 108b) das erste und zweite Rotorblatt (108a, 108b) durch das menschliche Auge voneinander unterscheidbar machen.

2. Luftfahrzeug (100) nach Anspruch 1, bei dem die Lichtquelle (120) eingerichtet ist, im Sicherheitsmodus (150) zu arbeiten, wenn sich das Luftfahrzeug (100) am Boden befindet, und im Sichtprüfungsmodus (160), wenn sich das Luftfahrzeug (100) in der Luft befindet.

3. Luftfahrzeug (100) nach Anspruch 1, bei dem die ersten und zweiten Reflexionen (140) des Lichts (130) von den ersten und zweiten Rotorblättern (108a, 108b) ein rotierendes Muster bilden, das sich mit einer dritten Frequenz dreht.

4. Luftfahrzeug (100) nach Anspruch 1, bei dem im Sicherheitsmodus (150) die zweite Frequenz in Abhängigkeit von der ersten Frequenz so gewählt ist, dass die ersten und zweiten Rotorblätter (108a, 108b) für das menschliche Auge voneinander ununterscheidbar bleiben.

5. Luftfahrzeug(100) nach Anspruch 1, bei dem im Sichtprüfungsmodus (160) die zweite Frequenz in Abhängigkeit von der ersten Frequenz so gewählt ist, dass die ersten und zweiten Reflexionen (140) des Lichts (130) von den ersten und zweiten Rotorblättern (108a, 108b) für das menschliche Auge gleichmäßig erscheinen.

6. Luftfahrzeug (100) nach Anspruch 1, bei dem die zweite Frequenz als ganzzahliger Teiler der ersten Frequenz gewählt ist.

7. Luftfahrzeug (100) nach einem der Ansprüche 1 bis 6, bei dem die Lichtquelle (120) gepulstes Licht (130) mit der zweiten Frequenz mit einem vorgegebenen Tastverhältnis aussendet, das sich von einem 50%igen Tastverhältnis unterscheidet.

8. Luftfahrzeug (100) nach einem der Ansprüche 1 bis 7 das ferner umfasst:
mindestens eine zusätzliche Lichtquelle (120), die auf der festen Oberfläche (125) des Luftfahrzeugs (100) installiert ist und mindestens ein zusätzliches gepulstes Licht (130) mit der zweiten Frequenz in Richtung der Mehrzahl von Rotorblättern (108) aussendet, wobei die Tastverhältnisse des Lichts (130) und des mindestens einen zusätzlichen Lichts (130) derart synchronisiert sind, dass das mindestens eine zusätzliche Licht (130) an ist, wenn das Licht (130) an ist, und das mindestens eine zusätzliche Licht (130) aus ist, wenn das Licht (130) aus ist.

9. Luftfahrzeug (100) nach einem der Ansprüche 1 bis 8, das ferner umfasst:
kontrastreiche Markierungen (170) auf den ersten und zweiten Rotorblättern (108a, 108b).

10. Luftfahrzeug (100) nach Anspruch 9, bei dem das Licht (130) für das menschliche Auge unsichtbar ist und bei dem die kontrastreichen Markierungen (170) aus photolumineszentem Material bestehen, so dass die ersten und zweiten Reflexionen (140) für das menschliche Auge sichtbar sind.

11. Luftfahrzeug (100) nach einem der Ansprüche 1-10 das ferner umfasst:
einen Sensor (180), der die erste Frequenz misst.

12. Luftfahrzeug (100) nach einem der Ansprüche 1 bis 11, das ferner umfasst:
eine Steuerung (190), die mindestens einen Ein-AusSchalter für die Lichtquelle (192), einen Moduswähler (193) zur Auswahl zwischen den mindestens zwei verschiedenen Modi, ein Anzeigefeld (194), eine Steuerungsschnittstelle (196), Mittel (197), die zum Auswählen der zweiten Frequenz eingerichtet sind, oder eine Energieversorgung (198) umfasst.

13. Luftfahrzeug (100) nach einem der Ansprüche 1 bis 12, bei dem die Schuberzeugungseinheit (103) mindestens einen Rotor (104), einen Propeller (105) oder ein Strahltriebwerk (106) umfasst.

## Revendications

1. Aéronef (100) comprenant une unité (103) de production de poussée avec une pluralité de pales (108) rotatives qui sont mises en rotation à une première fréquence, dans lequel des première et seconde pales (108a, 108b) rotatives parmi la pluralité de pales (108) rotatives ne peuvent être distinguées l'une de l'autre à l'œil nu à ladite première fréquence, comprenant :
une source (120) de lumière qui est montée sur une surface fixe (125) de l'aéronef (100) et émet des impulsions de lumière (130) en direction de la pluralité de pales (108) rotatives à une deuxième fréquence,
dans lequel :
la deuxième fréquence est choisie en fonction de la première fréquence de façon que des premiers reflets (140) de la lumière (130) réfléchie par la première pale (108a) rotative puissent être distinguées à l'œil nu de seconds reflets (140) de la lumière (130) réfléchie par la seconde pale (108b) rotative ;
**caractérisé en ce que** la source (120) de lumière est apte à fonctionner dans au moins deux modes différents comprenant un mode de sécurité (150) et un mode d'inspection visuelle (160) ; et **en ce que** dans le mode d'inspection visuelle (160), la deuxième fréquence est choisie en fonction de la première fréquence de façon que les premiers et seconds reflets (140) de la lumière (130) réfléchie par les première et seconde pales (108a, 108b) rotatives rendent les première et seconde pales (108a, 108b) rotatives distinguables l'une de l'autre à l'œil nu.

2. Aéronef (100) selon la revendication 1, dans lequel la source (120) de lumière est apte à fonctionner dans le mode de sécurité (150) lorsque l'aéronef (100) est au sol et dans le mode d'inspection visuelle (160) lorsque l'aéronef (100) est en vol.

3. Aéronef (100) selon la revendication 1, dans lequel les premiers et seconds reflets (140) de la lumière (130) réfléchie par les première et seconde pales (108a, 108b) rotatives forment un motif tournant qui est en rotation à une troisième fréquence.

4. Aéronef (100) selon la revendication 1, dans lequel, dans le mode de sécurité (150), la deuxième fréquence est choisie en fonction de la première fréquence de façon que les première et seconde pales (108a, 108b) rotatives demeurent non distinguables l'une de l'autre à l'œil nu.

5. Aéronef (100) selon la revendication 1, dans lequel, dans le mode d'inspection visuelle (160), la deuxième fréquence est choisie en fonction de la première fréquence de façon que les premiers et seconds reflets (140) de la lumière (130) réfléchie par les première et seconde pales (108a, 108b) rotatives paraissent immobiles à l'œil nu.

6. Aéronef (100) selon la revendication 1, dans lequel la deuxième fréquence est choisie de façon à constituer un diviseur entier de la première fréquence.

7. Aéronef (100) selon l'une quelconque des revendications 1-6, dans lequel la source (120) de lumière émet des impulsions de lumière (130) à la deuxième fréquence suivant un cycle d'utilisation prédéterminé qui est différent d'un cycle d'utilisation à 50%.

8. Aéronef (100) selon l'une quelconque des revendications 1 à 7, comprenant en outre :
au moins une source (120) de lumière supplémentaire qui est montée sur la surface fixe (125) de l'aéronef (100) et émet une impulsion d'au moins une lumière (130) supplémentaire à la deuxième fréquence en direction de la pluralité de pales (108) rotatives, dans lequel les cycles d'utilisation de la lumière (130) et ladite au moins une lumière (130) supplémentaire sont synchronisés de façon que ladite au moins une lumière (130) supplémentaire soit allumée lorsque la lumière (130) est allumée et que ladite au moins une lumière (130) supplémentaire soit éteinte lorsque la lumière (130) est éteinte.

9. Aéronef (100) selon l'une quelconque des revendications 1 à 8, comprenant en outre :
des marquages (170) à contraste élevé sur les première et seconde pales (108a, 108b) rotatives.

10. Aéronef (100) selon la revendication 9, dans lequel la lumière (130) est invisible à l'œil nu et dans lequel les marquages (170) à contraste élevé sont formés de matière photoluminescente de façon que les premiers et seconds reflets (140) soient visibles à l'oeil nu.

11. Aéronef (100) selon l'une quelconque des revendications 1 à 10, comprenant en outre :
un capteur (180) qui mesure la première fréquence.

12. Aéronef (100) selon l'une quelconque des revendications 1 à 11, comprenant en outre :
un contrôleur (190) qui inclut au moins l'un parmi un interrupteur marche-arrêt (192) pour la source de lumière, un sélecteur de mode (193) pour choisir entre lesdits au moins deux modes différents, un panneau d'affichage (194), une interface (196) de contrôleur, des moyens (197) aptes à choisir la deuxième fréquence, ou une alimentation électrique (198).

13. Aéronef (100) selon l'une quelconque des revendications 1-12, dans lequel l'unité (103) de production de poussée comprend au moins l'un parmi un rotor (104), un propulseur (105), ou un moteur à réaction (106).
